(19) Europäisches Patentamt
European Patent Office
Office européen des brevets

(11) Publication number: 0 205 327 B1

(12) # EUROPEAN PATENT SPECIFICATION

(45) Date of publication of patent specification: 26.09.90

(51) Int. Cl.[5]: C 07 C 235/18, C 07 C 235/20, C 07 C 279/14, C 07 D 303/36, A 01 N 39/04, A 01 N 43/02

(21) Application number: 86304357.6

(22) Date of filing: 06.06.86

(54) **Phenoxyacetylamide derivative and process for production and use thereof.**

(30) Priority: 08.06.85 JP 123495/85
14.06.85 JP 128073/85

(43) Date of publication of application:
17.12.86 Bulletin 86/51

(45) Publication of the grant of the patent:
26.09.90 Bulletin 90/39

(84) Designated Contracting States:
CH DE FR GB IT LI

(56) References cited:
EP-A-0 093 551
FR-A-1 458 106
FR-A-1 544 786
FR-M- 6 416
GB-A-1 223 062
CHEMICAL ABSTRACTS, vol. 97, no. 7, 16th August 1982, page 611, abstract no. 55420v, Columbus, Ohio, US; Z. RYZNERSKI et al.: "Phenoxyacetamide derivatives with potential antiinflammatory activity", & ACTA POL. PHARM. 1981, 38(5), 533-7

(73) Proprietor: Suntory Limited
1-40 Dojimahama 2-chome Kita-ku
Osaka-shi Osaka-fu 530 (JP)

(72) Inventor: Tanaka, Takaharu
5-1-801 Higashiawaji 1-chome Higashi-yodogawa-ku
Osaka-shi Osaka (JP)
Inventor: Higuchi, Naoki
13-23 Ishibashi 2-chome
Ikeda-shi Osaka (JP)
Inventor: Saito, Masayuki
16-16 Futaba-cho
Ibaraki-shi Osaka (JP)
Inventor: Hashimoto, Masaki
23-9 Shindou 3-chome
Ibaraki-shi Osaka (JP)

(74) Representative: Ford, Michael Frederick et al
MEWBURN ELLIS & CO. 2/3 Cursitor Street
London EC4A 1BQ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

## Description

The present invention relates to a novel phenoxyacetylamide derivative, and a process for the production and use thereof. The derivative exhibits a strong herbicidal activity, and is useful as an active ingredient for various kinds of agricultural chemicals.

A series of phenoxy compounds including 2,4-dichlorophenoxyacetic acid and 2-methyl-4-chlorophenoxyacetic acid have been used as herbicides important for agriculture and gardening.

Biological actions of these phenoxy herbicides mainly rely on the destruction in vivo of the auxin balance, which provides a disturbance of the fundamental physiological actions in a plant including abnormal cell division, abnormal morphology, inhibition of chlorophyll formation, and abnormal cell walls, resulting in a rise of the osmotic pressure. Since the auxin hormon type herbicides can be applied to soil as well as the stem and leaves of a plant, and transported within a plant, such herbicides exhibit a herbicidal action on perennial weeds in, for example, a rice field, on which other type of herbicides have no herbicidal action. Moreover, the auxin hormon type herbicides strongly inhibit regeneration of the treated weeds.

Such phenoxy type herbicides, however, can provide undesirable side effects on important crops such as rice, wheat and barley, and are not effective on some perennial weeds, and therefore, are used only for limited applications and by limited methods.

French patent 1544786 (L. Nouvel) describes p-halogeno phenoxyacetic acid compounds, but not for use as herbicides.

The present invention is directed to novel phenoxy type herbicides which provide no or very little undesirable side effects on important crops including rice, wheat and barley, exhibit a selective herbicidal effect on monocotyledons and broad-leaved plants, and are stable when applied, maintaining the above-mentioned advantages of the phenoxy type herbicides, which herbicide is a condensation product of phenoxyacetic acid and an amine or amino acid.

More particularly, the present invention provides a compound having the formula (I), which compound exhibits a herbicidal effect.

The present invention also provides a process for the production of the compound having the formula (I).

The present invention also provides a herbicidal composition containing said compound as an active ingredient.

The present invention also provides a method for killing or controlling weeds.

The present phenoxyacetylamide derivative has the following general formula (I):

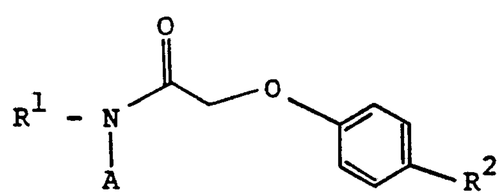

(I)

wherein,

$R^1$ represents a hydrogen atom;

$R^2$ represents a halogen atom; and

A represents 1,5-dicarboxypentyl group, 1,4-dicarboxybutyl group, 1-carboxy-1-phenylmethyl group, 3-carboxypropyl group, 1-carboxy-3-propanol group, 1-carboxypentyl group, 1-carboxybutyl group, 1-carboxyheptyl group, or a group

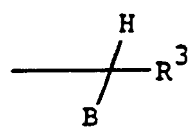

wherein,

$R^3$ represents a straight-chain alkyl group having 1 to 4 carbon atoms substituted by a vinyl group, epoxy group, nitroguanidino group or by a cycloalkyl group having 3 to 5 carbon atoms, and B is carboxyl; or $R^3$ is a branched chain alkyl group having 3 to 4 carbon atoms and B represents a formyl group, hydroxymethyl group or an alkylcarboxylic acid ester group having 1 to 4 carbon atoms; or

$R^1$ and $R^3$ together represent an alkylene group having up to 4 carbon atoms, which group with the nitrogen atom to which $R^1$ bonds and the carbon atom to which $R^3$ bonds, form a ring structure, and B represents carboxylic acid.

The alkyl as represented by the alkyl moiety for $R^3$ and B include methyl, ethyl, propyl and butyl.

The branched chain alkyl having 3 to 4 carbon atoms as represented by $R^3$ includes isopropyl, isobutyl, tertbutyl and 1-methyl-propyl.

The cycloalkyl group as a substituent for $R^3$ includes a cyclopropyl group, cyclobutyl group and cyclopentyl group.

When $R^1$ and $R^3$, together with the nitrogen atom to which $R^1$ bonds and the carbon atom to which $R^3$

bonds, form a ring structure, then $R^1$ and $R^3$, taken together, form for example, a 1-carboxytetramethylene group. The halogen as represented by $R^2$ is fluorine, chlorine, bromine or iodine.

The above-mentioned phenoxyacetylamide derivative of the present invention is produced, for example, by reacting an amino acid derivative of the following formula (II):

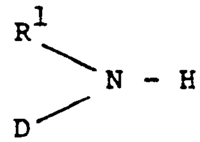

(II)

wherein,

$R^1$ represents a hydrogen atom;

D represents a 1,5-dicarboxypentyl group, 1,4-dicarboxybutyl group, 1-carboxyl-1-phenylmethyl group, 3-carboxypropyl group, 1-carboxy-3-propanol group, 1-carboxypentyl group, 1-carboxybutyl group or 1-carboxyheptyl group, or a group

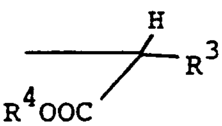

wherein,

$R^3$ represents a branched chain alkyl group having 3 to 4 carbon atoms, or a straight-chain alkyl group having 1 to 4 carbon atoms, substituted by vinyl, epoxy, nitroguanidino or by a cycloalkyl group having 3 to 5 carbon atoms; or $R^1$ and $R^3$, together with the nitrogen atom to which $R^1$ bonds and the carbon atom to which $R^3$ bonds, form a ring structure;

$R^4$ represents a hydrogen atom or an alkyl group having 1 to 4 carbon atoms;

with a carboxylic acid or carboxylic acid derivative of the following formula (IIIa) or (IIIb):

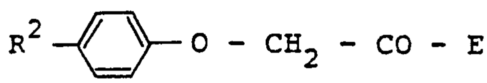

(IIIa)

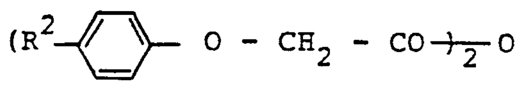

(IIIb)

wherein $R^2$ represents a halogen atom, and E represents a hydroxyl group, halogen atom or active ester group, in the presence or absence of a base in water or an organic medium to form a phenoxyacetylamide derivative of the present invention having the following formula (Ia):

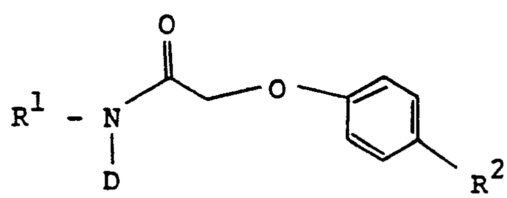

(Ia)

wherein $R^1$, $R^2$ and D have the same meanings as defined above.

The base used for the above-mentioned reaction is preferably an alkaline metal hydroxide such as sodium hydroxide, potassium hydroxide or lithium hydroxide, or trialkylamine such as trimethyl amine, triethylamine, dimethylethylamine or methyldiethylamine.

The reactions are preferably carried out at a temperature lower than room temperature for 1 to 12 hours in water or an organic medium with stirring.

When the amino acid derivative of the formula (II), wherein a carboxyl group in D is esterified with a lower alkyl group, is used, the derivative (II) is easily condensed with a halo-phenoxyacetic acid of the following formula (IIIc):

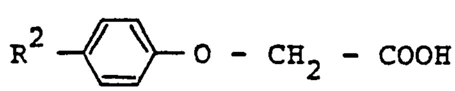

(IIIc)

wherein $R^2$ represents a halogen atom, by using a conventional condensation agent used for peptide synthesis, such as N-ethyl-N',N'-diaminopropylcarbodiimide or dicyclohexylcarbodiimide, to form a compound of the formula (Ia) of the present invention wherein a carboxyl group in D is esterified with a lower alkyl group. The ester bond is easily hydrolyzed to provide a carboxyl group.

The compound thus obtained of the formula (Ia) wherein D contains a carboxyl group or its ester ($COOR^4$) may be reduced to a compound of formula (I) wherein B represents a hydroxymethyl group.

For the reduction, any reducing agent which does not reduce amide can be used. Sodium borohydride is preferably used for such reduction. The reduction is preferably carried out in an alcohol or ether medium at a temperature between room temperature and 100°C, preferably between 40°C and 70°C. In the most preferable procedure for the reduction, a compound of the formula (Ia) and an excess amount of sodium borohydride are dissolved in tert-butanol or tetrahydrofuran, and methanol is added dropwise to the reaction mixture with heating. The volume ratio of the tert.-butanol or tetrahydrofuran and methanol to be added is preferably 5:1.

The compound of the formula (I) wherein B represents hydroxymethyl may be oxidized to a compound of the formula (I) wherein B represents a formyl group.

The oxidation is preferably carried out using a sulfur trioxide-pyridine complex as an oxidation agent in a dimethyl sulfoxide medium at a room temperature within 10 minutes. Other oxidizing agents include sodium chromate/sulfuric acid, chromic acid, manganese dioxide, silver oxide, dimethyl sulfoxide/phosphoric acid/dicyclohexylcarbodiimide.

Alternatively, the compound of the formula (Ia) wherein D contains a carboxyl group or its ester ($COOR^4$) may be converted to a compound of the formula (I) wherein B represents a formyl group by using hydrogenated diisobutyl alumina or hydrogenated lithium tri-tert.-butoxy aluminium.

The present compound thus synthesized is purified according to a conventional purification process, such as column chromatography and preparative thin-layer chromatography.

The compounds of the present invention have a weak toxicity for humans and domestic animals, and exhibit a highly specific and strong growth-inhibiting effect on monocotyledons or broad-leaved plants. Therefore, the present compounds may be widely used as agricultural chemicals.

When the compounds of the present invention are used as herbicides, they may be used by mixing with a solid carrier such as clay or diatomaceous earth, or with a liquid carrier, such as water, alcohols such as ethanol, propanol or butanol, aromatic hydrocarbons such as benzene, toluene or xylene, ethers such as dimethoxyethan, or dioxane, ketones such as methylethyl ketone, or esters such as ethyl acetate or butyl acetate. Alternatively, the present compounds may be formulated into emulsions, suspensions, powders, wettable powders, granules and concentrated emulsions. The formulations are prepared according to a conventional procedure such as dissolving, mixing, milling and granulating, using the above-mentioned carrier, if necessary by adding emulsifying agent, suspending agent, dispersing agent, stabilizing agent or spreader agent. The herbicidial formulations can contain, in addition to the present compound, another kind of herbicide, insecticide or plant-growth regulator. Usually, such formulations contain 0.5 to 90% by weight of the present compound.

The amount of the present compound used as a herbicide varies depending upon the kinds of weeds to be killed, kind of crop to be protected, and is usually 20 g to 500 g per 10 acres.

## Examples

The present invention will now be further illustrated by the following examples.

### Example 1

N-(p-chlorophenoxy)acetyl-DL-allylglycine (Compound SUAM 3555)

10 m moles of DL-allylglycine was dissolved in 10 ml of 1 N sodium hydroxide aqueous solution, and the resulting solution was diluted with water to 20 ml. To the solution, a solution of 10 m moles of p-chlorophenoxyacetyl chloride dissolved in 10 ml of benzene was slowly added dropwise with cooling and stirring. Immediately after the addition, the reaction mixture was added with 10 ml of additional 1 N sodium hydroxide aqueous solution, allowed to warm to room temperature, and stirred at the same temperature for one day.

After the reaction was completed, the reaction mixture was washed twice with ethyl ether to eliminate the unreacted acid chloride. The washed aqueous phase was acidified with hydrochloric acid to precipitate a product, which was extracted three times with ethyl acetate, the extract was evaporated to eliminate solvent, and the residue was recrystallized from ethyl acetate/benzene/hexane to obtain colorless crystals of the title compound.

### Example 2

N-(p-chlorophenoxy)acetyl-DL-cyclopropylmethylglycine (Compound SUAM 3556)

5 m moles of the compound SUAM 3555 prepared in Example 1 was dissolved in 40 ml of ethyl ether. To the resulting solution, a palladium chloride-acetonitrile complex catalyst, and a solution of an excess amount of diazomethane in ethyl ether were added. The reaction mixture was filtered to eliminate precipitate, and the filtrate was concentrated. The residue was dissolved in 10 ml of methanol, and the resulting solution was added with 40 ml of 1 N sodium hydroxide aqueous solution. The mixture was stirred at room temperature for an hour, and evaporated to eliminate methanol. The residual aqueous solution was acidified with hydrochloric acid to precipitate a product, which was then extracted three times with ethyl acetate, and the extract was dried on magnesium sulfate, and evaporated to eliminate solvent, and the residue was recrystallized from ethyl acetate/hexane to obtain colorless crystals of the title compound.

Example 3

N-(p-chlorophenoxy)acetyl-DL-2-amino-4,5-epoxypentanoic acid (Compound SUAM 3557)

5 m moles of the compound SUAM 3555 prepared in Example 1 was dissolved in 50 ml of methylene chloride, and to the resulting solution 10 m moles of m-chloroperbenzoic acid was added. The reaction mixture was stirred for a day and concentrated, and the residue was recrystallized from ethyl acetate/hexane to obtain colorless crystals of the title compound.

Example 4

N-(p-chlorophenoxy)acetyl-L-proline (Compound SUAM 3561)

According to the same procedure as described in Example 2, except that L-proline was used, the title compound was obtained as colorless crystals.

Example 5

N-(p-chlorophenoxy)acetyl-L-valine (Compound SUAM 3553) was obtained according to the same procedure as described in Example 3, except that L valine was used; the title compound was obtained as colorless crystals.

To obtain N-(p-chlorophenoxy)acetyl-L-valine methyl ester (Compound SUAM 3562), 10 m moles of the compound SUAM 3553 obtained above was dissolved in 100 ml of ethyl ether, and to the resulting solution a solution of an excess amount of diazomethane in ethyl ether was added. The reaction mixture was concentrated under a reduced pressure to obtain the title compound as a colorless oil.

Example 6

N-(p-chlorophenoxy)acetyl-L-valinol (Compound SUAM 3563)

5 m moles of the compound SUAM 3562 and 20 m moles of sodium borohydride were suspended in 20 ml of tert.-butanol, and the suspension was stirred with heating. The suspension was then refluxed with the dropwise addition of 20 m moles of absolute methanol. After the addition, the suspension was refluxed for an additional hour, cooled to a room temperature, and the mixture was added with 20 ml of water with ice-cooling. The reaction mixture was evaporated to eliminate methanol and tert.-butanol, and the residual aqueous phase was extracted with ethyl acetate. The extract was washed with a saturated sodium chloride aqueous solution, and dried with anhydrous magnesium sulfate. The solution was evaporated to eliminate solvent, and the residual crude product was purified by middle pressure column chromatography using silica gel, and the title compound was obtained as a white powder.

Example 7

N-(p-chlorophenoxy)acetyl-L-valinal (Compound SUAM 3564)

2 m moles of the compound SUAM 3563 prepared in Example 6 was dissolved in 8 ml of absolute dimethylsulfoxide, and to the resulting solution 8 m moles of triethylamine was added. To the reaction mixture, a solution of 8 m moles of sulfur trioxidepyridine complex in 8 ml of dimethylsulfoxide was added with stirring. After stirring for 10 minutes, the reaction mixture was poured on 100 ml of ice water, and extracted with ethyl acetate. The extract was washed with 10% citric acid aqueous solution, saturated sodium bicarbonate aqueous solution, and again with a saturated sodium chloride aqueous solution, and dried on anhydrous magnesium sulfate. The solution was evaporated to eliminate solvent, and the residual crude product was purified by silica gel chromatography, and the title compound was obtained as a colorless powder.

Example 8

N-(p-chlorophenoxy)acetyl-L-nitroarginine (Compound SUAM 3554)

According to the same procedure as described in Example 1, except that nitro-L-arginine was used, the title compound was obtained as colorless crystals.

Example 9

N-(p-chlorophenoxy)acetyl-L-α-aminoadipic acid (Compound SUAM 3650)

10 m moles of L-α-aminoadipic acid was dissolved in 20 ml of 1 N sodium hydroxide solution, and the resulting solution was diluted with water to 30 ml. To the aqueous solution, a solution of 10 m moles of p-chlorophenoxyacetyl chloride in 10 ml of benzene was slowly added dropwise with ice-cooling and stirring. Immediately after, 10 ml of additional 1 N sodium hydroxide solution was added. The reaction mixture was allowed to warm to a room temperature, and stirred for one day.

After the reaction was completed, the reaction mixture was extracted twice with ethyl ether to eliminate the unreacted acid chloride. The residual aqueous phase was acidified with hydrochloric acid to precipitate a product, which was then extracted three times with ethyl acetate. The extract was evaporated under a reduced pressure to eliminate solvent, and the residue was recrystallized from ethyl acetate/benzene/hexane to obtain colorless crystals of N-(p-chlorophenoxy)acetyl-L-α-aminoadipic acid.

According to the same procedure as described above, except that DL-α-amino-pimelic acid was used in place of L-α-aminoadipic acid, N-(p-chlorophenoxy)acetyl-DL-α-aminopimelic acid was obtained as colorless crystals (Compound SUAM 3653).

Example 10

N-(p-chlorophenoxy)acetyl-L-norleucine (Compound SUAM 3663)

10 m moles of L-norleucine was dissolved in 10 ml of 1 N sodium hydroxide solution, and the resulting solution was diluted with water to 20 ml. To the solution, a solution of 10 m moles of p-chlorophenoxyacetyl chloride dissolved in 10 ml of benzene was added dropwise slowly with ice-cooling and stirring. Immediately after, 10 ml of additional 1 N sodium hydroxide solution was added. The reaction mixture was allowed to warm to room temperature, and stirred for an hour.

After the reaction was completed, the mixture was extracted twice with ethyl ether to eliminate the unreacted acid chloride. The aqueous phase was acidified with hydrochloric acid to precipitate a product, which was extracted three times with ethyl acetate, and the extract was evaporated under a reduced pressure to eliminate solvent. The residue was recrystallized from ethyl acetate/benzene/hexane to obtain colorless crystals of N-(p-chlorophenoxy)acetyl-L-norleucine.

According to the same procedure as described above, except that DL-norvaline and DL-2-aminooctanoic acid were used in place of L-norleucine, corresponding products N-(p-chlorophenoxy)acetyl-DL-norvaline (Compound SUAM 3664) and N-(p-chlorophenoxy)acetyl-DL-2-aminooctanoic acid (Compound SUAM 3665) were obtained as colorless crystals, respectively.

Example 11

N-(p-chlorophenoxy)acetyl-DL-phenylglycine (Compound SUAM 3656)

10 m moles of DL-phenylglycine was dissolved in 10 ml of 1 N sodium hydroxide solution, and the resulting solution was diluted with water to 20 ml. To the aqueous solution, a solution of 10 m moles of p-chlorophenoxyacetyl chloride dissolved in 10 ml of benzene was slowly added dropwise with ice-cooling and stirring. Immediately after, 10 ml of additional 1 N sodium hydroxide solution was added. The reaction mixture was allowed to warm to a room temperature and stirred for one day.

After the reaction was completed, the reaction mixture was reacted twice with ethyl ether to eliminate the unreacted acid chloride. The aqueous phase was acidified with hydrochloric acid to precipitate a product, which was then extracted three times with ethyl acetate, the extract was evaporated under a reduced pressure to eliminate solvent. The residue was recrystallized from ethyl acetate/benzene/hexane to obtain colorless crystals of N-(p-chlorophenoxy)acetyl-DL-phenylglycine.

The physico-chemical properties of the compounds prepared by Examples 1 to 11 are set forth in Table 1 and Table 2.

TABLE 1

| (Exp. No.)<br>SUAM-No. | Substituent | Melting point (°C) | IR-Spectrum ($cm^{-1}$) | NMR-Spectrum (δ ppm, J is shown by Hz) | Mass spectrum (m/z) | Elemental analysis |
|---|---|---|---|---|---|---|
| (1)<br>3555 | $R^1$ —H<br>$R^3$ 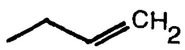<br>B —COOH | 106—107 | (KBr)<br>3300, 1730<br>1620, 1210<br>820 | ($CD_3OD$), 2.56 (2H, m), 4.55 (1H, t, J = 6.0), 4.55 (2H, s) 5.10 (2H, m), 5.70 (1H, m), 6.94 (2H, d, J = 8.8), 7.27 (2H, d, J = 8.8) | 283<br>($M^+$) | C (%) H (%) N (%)<br>Calc. 55.04 4.97 4.94<br>Found 55.12 4.90 4.98<br>($C_{13}H_{14}NO_4Cl$) |
| (2)<br>3556 | $R^1$ —H<br>$R^3$ 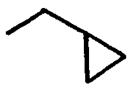<br>B —COOH | 143—144 | (KBr)<br>3310, 2920<br>1730, 1620<br>1540, 1480<br>1215, 820 | ($CD_3OD$), 0.06 (2H, m), 0.42 (2H, m), 0.64 (1H, m) 1.70 (2H, m), 4.55 (2H, s), 4.58 (1H, m), 6.96 (2H, d, J = 9.0), 7.24 (2H, d, J = 9.0) | — | C (%) H (%) N (%)<br>Calc. 56.48 5.42 4.70<br>Found 56.49 5.42 4.69<br>($C_{14}H_{16}NO_4Cl$) |
| (3)<br>3557 | $R^1$ —H<br>$R^3$ 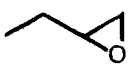<br>B —COOH | 184—189 (Decomposition) | (Kbr)<br>3320, 1760<br>1645, 1545<br>1480, 1235<br>825 | ($CD_3OD$), 2.44 (2H, m), 3.70 (2H, ddd, J = 12.8, 3.5, 3.5), 4.68 (1H, m), 4.52 (2H, s), 4.80 (1H, m), 6.97 (2H, d, J = 9.0), 7.28 (2H, d, J = 9.0) | — | C (%) H (%) N (%)<br>Calc. 52.10 4.71 4.67<br>Found 51.70 4.67 4.67<br>($C_{13}H_{14}NO_5Cl$) |
| (4)<br>3561 | $R^1$<br>$R^3$ 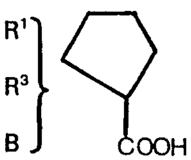<br>B | 98.5—100 | (KBr)<br>2950, 1720<br>1485, 1230<br>1165, 820 | — | — | C (%) H (%) N (%)<br>Calc. 55.04 4.97 4.94<br>Found 55.21 4.88 5.12<br>($C_{13}H_{14}NO_4Cl$) |
| (5)<br>3562 | $R^1$ —H<br>$R^3$ 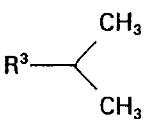<br>B —$COOCH_3$ | (Oil) | (Film)<br>3400, 3300<br>2950, 1730<br>1670, 1480<br>1230, 1200<br>820 | ($CDCl_3$), 1.90 (3H, d, J= 6.5), 1.94 (3H, d, J = 6.5), 3.72 (3H, s), 4.50 (2H, s), 4.62 (1H, dd, J = 1.5, 5.0), 6.82 (1H, d, J = 5.0) 6.85 (2H, d, J = 9.1), 7.24 (2H, d, J = 9.1) | 299<br>($M^+$) | — |

TABLE 1 (Continued)

| (Exp. No.)<br>SUAM-No. | Substituent | Melting point (°C) | IR-Spectrum ($cm^{-1}$) | NMR-Spectrum (δ ppm, J is shown by Hz) | Mass spectrum (m/z) | Elemental analysis |
|---|---|---|---|---|---|---|
| (6)<br>3563 | $R^1$ —H<br>$R^3$ 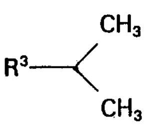<br>B —$CH_2OH$ | 100—101.5 | (KBr)<br>3250, 3080<br>2950, 1650<br>1480, 1220 | ($CDCl_3$), 0.90 (3H, d, J = 7.2), 0.94 (3H, d, J = 7.2), 1.90 (1H, m), 3.48 (1H, brs), 3.70 (2H, m), 3.85 (1H, m), 4.46 (2H, s), 6.80 (2H, d, J = 9.1), 6.70 (1H, m), 7.22 (2H, d, J = 9.1) | 271<br>($M^+$) | — |
| (7)<br>3564 | $R^1$ —H<br>$R^3$ 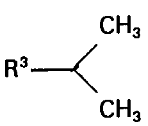<br>B —CHO | 60—62 | (KBr)<br>3230, 2950<br>1730, 1630<br>1480, 1220 | ($CDCl_3$), 0.96 (3H, 4, J = 7.2), 1.04 (3H, d, J = 7.2), 2.38 (1H, m), 4.48 (2H, s), 4.62 (1H, dd, J = 4.2, 8.4), 6.85 (2H, d, J = 9.1), 7.20 (1H, br), 7.25 (2H, d, J = 9.1), 9.58 (1H, s) | 269<br>($M^+$) | — |
| (8)<br>3554 | $R^1$ —H<br>$R^3$ 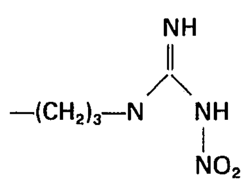<br>B —COOH | 177—179<br>(Decompo-<br>sition) | (KBr)<br>3390, 1725<br>1645, 1600<br>1540, 1490<br>1240, 820 | ($d_6$—DMSO), 1.65 (4H, m), 3.25 (2H, m), 4.30 (1H, m), 4.57 (2H, s), 6.93 (2H, d, J = 9.1), 7.30 (2H, d, J = 9.1), 7.90 (2H, m), 8.25 (1H, d, J = 7.2) | — | — |

TABLE 2

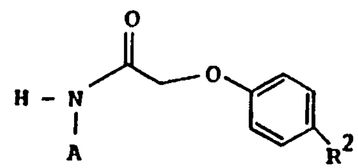

| (Exp. No.) SUAM-No. | Substituent | Appearance Melting point (°C) | IR-Spectrum (KBr, $cm^{-1}$) | NMR-Spectrum ($CD_3OD$, δ ppm), (J is shown by Hz) | Mass spectrum (m/z) | Elemental analysis |
|---|---|---|---|---|---|---|
| (9)<br>3650 | A 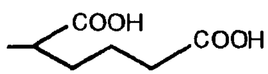<br>$R^2$ —Cl | Colorless crystal<br>149—150 | 3320, 1700<br>1660, 1280<br>1260, 1200<br>825, 820 | 1.63 (2H, m), 1.87 (2H, m)<br>2.30 (2H, t, J = 7.4), 4.48<br>(1H, ddd, J = 4.8, 9.1),<br>4.57 (2H, s), 6.98 (2H, d,<br>J = 9.1), 7.27 (2H, d, J = 9.1) | 329<br>($M^+$) | C (%) H (%) N (%)<br>Calc. 51.00 4.89 4.25<br>Found 51.03 4.88 4.21<br>($C_{14}H_{16}NO_6Cl$) |
| (9)<br>3653 | A 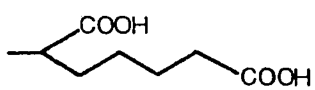<br>$R^2$ —Cl | Colorless crystal<br>138—140.5 | 3375, 1710<br>1625, 1230<br>1215, 835 | 1.35 (2H, m), 1.59 (2H, m)<br>1.84 (2H, m), 2.26 (2H, t,<br>J = 7.4), 4.47 (1H, dd, J = 4.8,<br>9.1), 4.56 (2H, s),<br>6.98 (2H, d, J = 9.1), 7.28<br>(2H, d, J = 9.1) | 343<br>($M^+$) | C (%) H (%) N (%)<br>Calc. 52.41 5.28 4.09<br>Found 52.51 5.21 4.10<br>($C_{15}H_{18}NO_6Cl$) |
| (10)<br>3663 | A 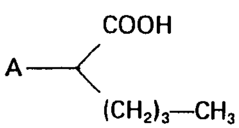<br>$R^2$ —Cl | Colorless crystal<br>106.5—108 | 3385, 1270<br>1635, 1240<br>1205, 820 | 0.88 (3H, t, J = 6.7), 1.30<br>(4H, m), 1.82 (2H, m),<br>4.45 (1H, dd, J = 8.6, 4.8),<br>4.56 (2H, s), 6.98 (2H, d,<br>J = 9.1), 7.28 (2H, d, J = 9.1) | 299<br>($M^+$) | C (%) H (%) N (%)<br>Calc. 56.10 6.01 4.67<br>Found 55.93 5.94 4.69<br>($C_{14}H_{18}NO_4Cl$) |

TABLE 2 (Continued)

| (Exp. No.) SUAM-No. | Substituent | Appearance Melting point (°C) | IR-Spectrum (KBr, $cm^{-1}$) | NMR-Spectrum ($CD_3OD$, δ ppm), (J is shown by Hz) | Mass spectrum (m/z) | Elemental analysis |
|---|---|---|---|---|---|---|
| (10) 3664 | 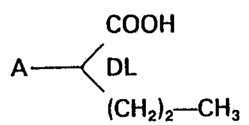 $R^2$ —Cl | Colorless crystal 94—96.5 | 3400, 1715 1640, 1240 820 | 0.92 (3H, t, J = 7.2), 1.35 (2H, m), 1.78 (2H, m), 4.47 (1H, dd, J = 9.1, 4.8), 4.56 (2H, s), 6.98 (2H, d, J = 9.1), 7.27 (2H, d, J = 9.1) | 285 ($M^+$) | — |
| (10) 3665 | 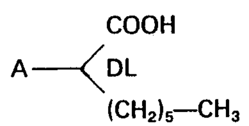 $R^2$ —Cl | Colorless crystal 107—108 | 3340, 1720 1620, 1240 1210, 830 | 0.89 (3H, t, J = 6.6), 1.28 (8H, m), 1.80 (2H, m), 4.44 (1H, dd, J = 4.8, 8.9), 4.57 (2H, dd, J = 15.6, 15.6) 6.97 (2H, d, J = 9.1) 7.27 (2H, d, J = 9.1) | 327 ($M^+$) | C (%) H (%) N (%)<br>Calc. 58.63 6.76 4.27<br>Found 56.64 6.69 4.36<br>($C_{16}H_{22}NO_4Cl$) |
| (11) 3656 | 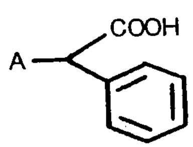 $R^2$ —Cl | Colorless crystal 156—157 | 3370, 1720 1615, 1235 825, 815 | 4.76 (2H, s), 5.50 (1H, s) 6.96 (2H, d, J = 9.1) 7.27 (2H, d, J = 9.1) 7.34 (5H, s) | 319 ($M^+$) | C (%) H (%) N (%)<br>Calc. 60.10 4.41 4.38<br>Found 60.29 4.32 4.41<br>($C_{16}H_{14}NO_4Cl$) |

The compounds of the present invention were evaluated for their selective herbicidal activity on broad-leaved plants, i.e., cucumber and radish, and monocotyledons, i.e., rice, wheat and barnyard grass.

The test was carried out as a before-germination test and after-germination test.

For the before-germination test for cucumber and radish, five each of seeds of these plants were seeded in soil contained in a pot 6 × 15 × 15 cm in size. Immediately after the seeding, 60 ml per pot of aqueous acetone solution containing a predetermined amount of test compound was applied to the pot. The aqueous solution of the test compound was prepared so that the above-mentioned application provides 200 g or 50 g of the test compound per 10 ares. For after-germination test, for cucumber and radish, the seeds thereof were germinated and grown in a greenhouse until each plant had two to three leaves, and the two lots of seedlings were transplanted to a pot as described for the before-germination test, and immediately after the transplanting, the test compound was applied as described above.

For the before-germination test for rice, barley and barnyard grass, ten each of seeds of these plant were seeded at a depth of 1 to 2 cm in soil from a rice field contained in a pot of 20 × 10 × 6 cm in size, submerged to a depth of about 3 cm, and 60 ml of an aqueous solution of test compound was incorporated the water in the pot. The aqueous solution was prepared so that the above-mentioned application provides 200 g or 50 g of the test compound per 10 ares. For the after-germination test for rice, barley and barnyard grass, the seeds thereof were germinated and grown in a greenhouse until each plant had 2 to 3 leaves, and the two lots of seedlings were transplanted to a pot as described for the before-germination test, and immediately after the transplanting, the test compound was applied as described above.

After the application of the test compounds, the growth of the plants was observed, and the herbicidal effect evaluated by scores of 5 (complete killing) to 0 (not effective).

The results are set forth in Table 3.

TABLE 3

| Test compound (Exp. No.) SUAM No. | Amount of application (g/10 ares) | Before-germination test | | | | | After-germination test | | | | |
|---|---|---|---|---|---|---|---|---|---|---|---|
| | | Broad-leaved plant | | Monocotyledons | | | Broad-leaved plant | | Monocotyledons | | |
| | | Cucumber | Radish | Rice | Wheat | Barnyard grass | Cucumber | Radish | Rice | Wheat | Barnyard grass |
| (1) 3555 | 200 | 5 | 5 | 5 | 4 | 4 | — | — | — | — | — |
| | 50 | 4 | 4 | 4 | 3 | 3 | | | | | |
| (2) 3556 | 200 | 5 | 5 | 5 | 4 | 4 | — | — | — | — | — |
| | 50 | 4 | 4 | 3 | 2 | 2 | | | | | |
| (3) 3557 | 200 | 5 | 5 | 5 | 3 | 4 | — | — | — | — | — |
| | 50 | 5 | 4 | 3 | 2 | 3 | | | | | |
| (4) 3561 | 200 | 5 | 5 | 4 | 4 | 5 | — | — | — | — | — |
| | 50 | 4 | 4 | 2 | 0 | 4 | | | | | |
| (5) 3562 | 200 | 5 | 5 | 5 | 4 | 4 | 5 | 5 | 3 | 5 | 5 |
| | 50 | 5 | 5 | 3 | 3 | 3 | 5 | 5 | 0 | 4 | 5 |
| (6) 3563 | 200 | 5 | 5 | 0 | 2 | 4 | 5 | 5 | 0 | 2 | 3 |
| | 50 | 3 | 4 | 0 | 0 | 3 | 4 | 4 | 0 | 0 | 2 |

TABLE 3 (Continued)

| Test compound (Exp. No.) SUAM No. | Amount of application (g/10 ares) | Before-germination test | | | | | After-germination test | | | | |
|---|---|---|---|---|---|---|---|---|---|---|---|
| | | Broad-leaved plant | | Monocotyledons | | | Broad-leaved plant | | Monocotyledons | | |
| | | Cucumber | Radish | Rice | Wheat | Barnyard grass | Cucumber | Radish | Rice | Wheat | Barnyard grass |
| (7) 3564 | 200 | 5 | 5 | 5 | 4 | 5 | 5 | 5 | 5 | 5 | 5 |
| | 50 | 4 | 5 | 3 | 3 | 4 | 4 | 3 | 3 | 3 | 3 |
| (8) 3554 | 200 | 5 | 5 | 5 | 4 | 5 | 5 | 5 | 3 | 3 | 3 |
| | 50 | 5 | 5 | 2 | 1 | 4 | 4 | 5 | 0 | 0 | 2 |
| (9) 3650 | 200 | 5 | 4 | 4 | 4 | 5 | — | — | — | — | — |
| | 50 | 4 | 4 | 4 | 3 | 4 | | | | | |
| (9) 3653 | 200 | 5 | 5 | 3 | 3 | 3 | — | — | — | — | — |
| | 50 | 5 | 5 | 2 | 2 | 2 | | | | | |
| (10) 3663 | 200 | 5 | 5 | 3 | 4 | 5 | — | — | — | — | — |
| | 50 | 5 | 4 | 2 | 3 | 3 | | | | | |
| (10) 3664 | 200 | 5 | 5 | 4 | 3 | 4 | — | — | — | — | — |
| | 50 | 5 | 5 | 3 | 2 | 3 | | | | | |
| (10) 3665 | 200 | 5 | 4 | 5 | 5 | 5 | — | — | — | — | — |
| | 50 | 5 | 4 | 0 | 3 | 4 | | | | | |
| (11) 3656 | 200 | 5 | 5 | 3 | 2 | 3 | — | — | — | — | — |
| | 50 | 3 | 4 | 1 | 2 | 2 | | | | | |

As seen from Table 3, the compounds of the present invention exhibit a notable herbicidal effect.

In particular, compounds SUAMs 3554, 3564, 3653, 3663, 3664, and 3665 have a selective herbicidal effect.

Example 12

Typical herbicidal compositions of the present invention were prepared as follows.

Granule

| Ingredient | Amount (part by weight) |
|---|---|
| The present compound | 5.5 |
| Bentonite | 54.5 |
| Talc | 40.0 |

The above-mentioned ingredients were mixed homogeneously and milled. The mixture was added with a small amount of water and mixed to form a paste. The paste was then granulated and dried.

Emulsion

| Ingredient | Amount (part by weight) |
|---|---|
| The present compound | 20 |
| Tween-80 | 5 |
| Span-80 | 5 |
| Solvent naphtha | 70 |

The above-mentioned ingredients were mixed to form an emulsion.

Wettable powder

| Ingredient | Amount (part by weight) |
|---|---|
| The present compound | 50 |
| Diatomaceous earth | 30 |
| Clay | 10 |
| Sodium lauryl sulfate | 10 |

The above-mentioned ingredients were mixed homogeneously.

## Claims

1. A phenoxyacetylamide derivative having the following general formula (I):

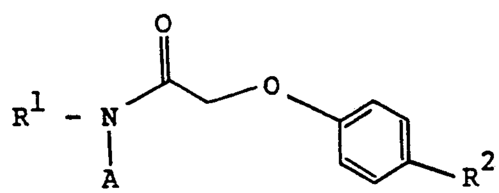

wherein,

$R^1$ represents a hydrogen atom and

$R^2$ represents a halogen atom;

characterised in that A represents 1,5-dicarboxypentyl group, 1,4-dicarboxybutyl group, 1-carboxy-1-phenylmethyl group, 3-carboxypropyl group, 1-carboxy-3-propanol group, 1-carboxypentyl group, 1-carboxybutyl group, 1-carboxyheptyl group, or a group

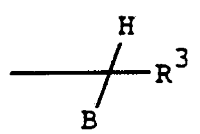

wherein,

$R^3$ represents a straight-chain alkyl group having 1 to 4 carbon atoms substituted by a vinyl group, epoxy group, nitroguanidino group or by a cycloalkyl group having 3 to 5 carbon atoms; and B represents a carboxyl group or; $R^3$ represents a branched chain alkyl group having 3 to 4 carbon atoms; and B represents a formyl group, hydroxymethyl group or an alkylcarboxylic acid ester group having 1 to 4 carbon atoms; or wherein $R^1$ and $R^3$, taken together, represent an alkylene group having up to 4 carbon atoms, which group, together with the nitrogen atom to which $R^1$ bonds and the carbon atom to which $R^3$ bonds, form a ring structure, and B represents carboxylic acid.

2. A phenoxyacetylamide derivative according to claim 1 wherein $R^2$ represents a chlorine or bromine atom.

3. A phenoxyacetylamide derivative according to claim 1 or 2 wherein the derivative is optically active.

4. Use as a herbicide of a derivative according to any one of claims 1 to 3.

5. A process for the production of a phenoxyacetylamide derivative of claim 1 comprising any of (i) reacting an amino acid derivative of the following formula

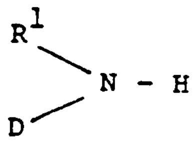

wherein,

$R^1$ represents a hydrogen atom

D represents a 1,5-dicarboxypentyl group, 1,4-dicarboxybutyl group, 1-carboxy-1-phenylmethyl group, 3-carboxypropyl group, 1-carboxy-3-propanol group, 1-carboxypentyl group, 1-carboxybutyl group, 1-carboxyheptyl group, or a group

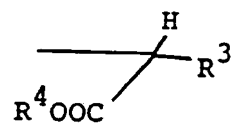

wherein,

$R^3$ represents a branched chain alkyl group having 3 to 4 carbon atoms or a straight-chain alkyl group having 1 to 4 carbon atoms substituted by a vinyl group, epoxy group, nitroguanidino group or by a cycloalkyl group having 3 to 5 carbon atoms; or

$R^1$ and $R^3$, together with the nitrogen atom to which $R^1$ bonds and the carbon atom to which $R^3$ bonds, form a ring structure;

$R^4$ represents a hydrogen atom or an alkyl group having 1 to 4 carbon atoms;

with a carboxylic acid or carboxylic acid derivative of the following formula (IIIa) or (IIIb):

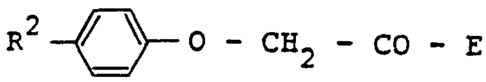

(IIIa)

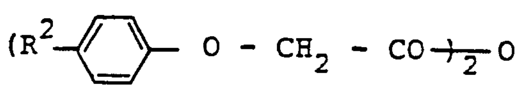

(IIIb)

wherein $R^2$ represents a halogen atom, and E represents a hydroxyl group, halogen atom or active ester group, in the presence or absence of a base to form a phenoxyacetylamide derivative of the present invention having the following formula (Ia):

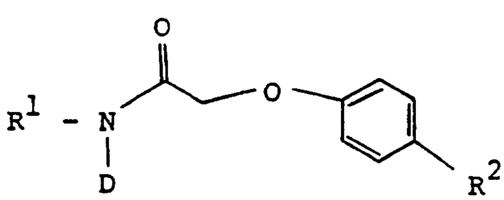

(Ia)

wherein $R^1$, $R^2$ and D have the same meanings as defined above; (ii) reducing a compound (Ia) in the presence of a reducing agent; (iii) reducing a compound (Ia) in the presence of a reducing agent and then oxidizing the product in the presence of an oxidizing agent; (iv) oxidizing a compound (Ia) wherein D is

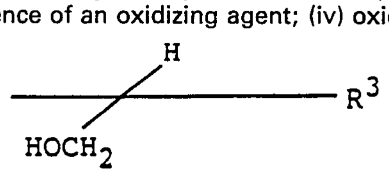

in the presence of an oxidising agent.

6. A process according to claim 5 wherein the base is an alkali metal hydroxide or a trialkylamine.

7. A process according to claim 5 wherein the reducing agent is sodium borohydride.

8. A process according to claim 5, wherein the oxidizing agent is sulfur trioxide-pyridine complex in dimethyl sulfoxide, chromic acid, sodium chromate, sulfuric acid, manganese dioxide, silver oxide.

9. A herbicidal composition comprising a phenoxyacetylamide derivative of any one of claims 1 to 3 and a carrier.

10. A herbicidal composition according to claim 9 wherein the said phenoxyacetylamide derivative is present in an amount which is 0.5 to 90% by weight of the composition.

11. A method for killing or controlling plants comprising applying in an effective amount a phenoxyacetylamide derivative of any one of claims 1 to 3, or a herbicidal composition of claim 9 or claim 10, to a medium on which plants to be killed or controlled would grow, or to plants to be killed or controlled, or to the site of such plants.

12. A method according to claim 11 wherein the effective amount is 20 to 500 g per 10 ares.

**Patentansprüche**

1. Phenoxyacetylamidderivat der folgenden allgemeinen Formel (I):

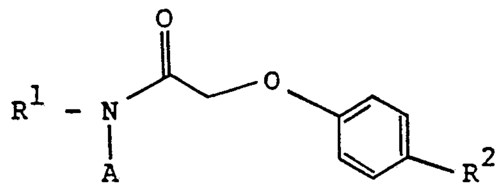

wobei

$R^1$ ein Wasserstoffatom und

$R^2$ ein Halogenatom ist; dadurch gekennzeichnet, daß A eine 1,5-Dicarboxypentylgruppe, 1,4-Dicarboxybutylgruppe, 1-Carboxy-1-phenylmethylgruppe, 3-Carboxypropylgruppe, 1-Carboxy-3-propanolgruppe, 1-Carboxypentylgruppe, 1-Carboxybutylgruppe, 1-Carboxyheptylgruppe oder eine Gruppe der Formel

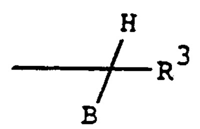

ist, wobei $R^3$ eine geradkettige Alkylgruppe mit 1 bis 4 Kohlenstoffatomen ist, die durch eine Vinylgruppe, Epoxygruppe, Nitroguanidingruppe oder durch eine Cycloalkylgruppe mit 3 bis 5 Kohlenstoffatomen substituiert ist; und B eine Carboxylgruppe ist; oder $R^3$ eine verzweigte Alkylgruppe mit 3 bis 4 Kohlenstoffatomen; und B eine Formylgruppe, Hydroxymethylgruppe oder eine Alkylcarbonsäureestergruppe mit 1 bis 4 Kohlenstoffatomen ist; oder wobei $R^1$ und $R^3$ gemeinsam eine Alkylengruppe mit bis zu 4 Kohlenstoffatomen darstellen, wobei diese Gruppe zusammen mit dem Stickstoffatom, durch welches $R^1$ gebunden ist, und dem Kohlenstoffatom, durch welches $R^3$ gebunden ist, eine Ringstruktur bilden, und B Carbonsäure bedeutet.

2. Phenoxyacetylamidderivat nach Anspruch 1, wobei $R^2$ ein Chlor- oder Bromatom ist.

3. Phenoxyacetylamidderivat nach Anspruch 1 oder 2, wobei das Derivat optisch aktiv ist.

4. Verwendung eines Derivats nach einem der Ansprüche 1 bis 3 als Herbizid.

5. Verfahren zur Herstellung eines Phenoxyacetylamidderivats nach Anspruch 1, beliebig bestehend aus den Stufen (i) Umsetzen eines Aminosäurederivats der folgenden Formel

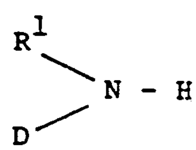

wobei

$R^1$ ein Wasserstoffatom,

D eine 1,5-Dicarboxypentylgruppe, 1,4-Dicarboxybutylgruppe, 1-Carboxy-1-phenylmethylgruppe, 3-Carboxypropylgruppe, 1-Carboxy-3-propanolgruppe, 1-Carboxypentylgruppe, 1-Carboxybutylgruppe, 1-Carboxyheptylgruppe oder eine Gruppe

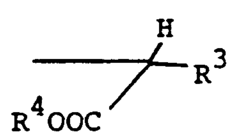

ist, wobei $R^3$ eine verzweigte Alkylgruppe mit 3 bis 4 Kohlenstoffatomen oder eine geradkettige Alkylgruppe mit 1 bis 4 Kohlenstoffatomen ist, die durch eine Vinylgruppe, Epoxygruppe, Nitroguanidingruppe oder durch eine Cycloalkylgruppe mit 3 bis 5 Kohlenstoffatomen substituiert ist; oder $R^1$ und $R^3$ gemeinsam mit dem Stickstoffatom, durch das $R^1$ gebunden ist, und dem Kohlenstoffatom, durch das $R^3$ gebunden ist, eine Ringstruktur bilden;

$R^4$ ein Wasserstoffatom oder eine Alkylgruppe mit 1 bis 4 Kohlenstoffatomen ist;

mit einer Carbonsäure oder einem Carbonsäurederivat der folgenden Formel (IIIa) oder (IIIb):

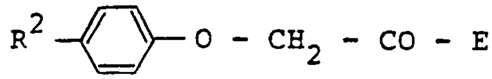

(IIIa)

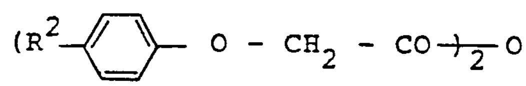

(IIIb)

wobei $R^2$ ein Halogenatom und E eine Hydroxylgruppe, ein Halogenatom oder eine aktive Estergruppe ist, in Gegenwart oder Abwesenheit einer Base zur Bildung eines Phenoxyacetylamidderivats nach der Erfindung der folgenden Formel (Ia):

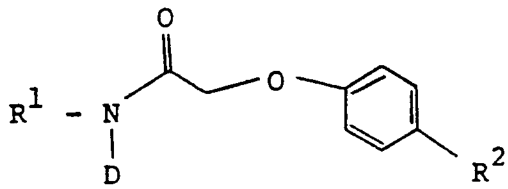

(Ia)

wobei $R^1$, $R^2$ und D die vorstehend angegebene Bedeutung haben; (ii) Reduzieren einer Verbindung (Ia) in Gegenwart eines Reduktionsmittels; (iii) Reduzieren einer Verbindung (Ia) in Gegenwart eines Reduktionsmittels und anschließendes Oxidieren des Produkts in Gegenwart eines Oxidationsmittels; (iv) Oxidieren einer Verbindung (Ia), wobei D die Bedeutung

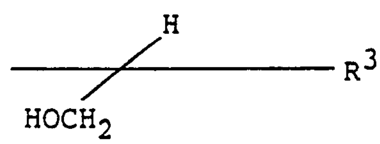

hat, in Gegenwart eines Oxidationsmittels.

6. Verfahren nach Anspruch 5, wobei die Base ein Alkalimetallhydroxid oder ein Trialkylamin ist.

7. Verfahren nach Anspruch 5, wobei das Reduktionsmittel Natriumborhydrid ist.

8. Verfahren nach Anspruch 5, wobei das Oxidationsmittel Schwefeltrioxid-Pyridin-Komplex in Dimethylsulfoxid, Chromsäure, Natriumchromat/Schwefelsäure, Mangandioxid, Silberoxid ist.

9. Herbizidzusammensetzung, enthaltend ein Phenoxyacetylamidderivat nach einem der Ansprüche 1 bis 3 und einen Trägerstoff.

10. Herbizidzusammensetzung nach Anspruch 9, wobei das Phenoxyacetylamidderivat in einer Menge von 0,5 bis 90 Gew.-%, bezogen auf die Zusammensetzung, vorhanden ist.

11. Verfahren zum Abtöten oder Regulieren von Pflanzen, bei dem man ein Phenoxyacetylamidderivat nach einem der Ansprüche 1 bis 3 oder eine Herbizidzusammensetzung nach Anspruch 9 oder Anspruch 10 in effektiver Menge auf ein Medium, auf dem die abzutötenden oder zu regulierenden Pflanzen wachsen, oder auf die abzutötenden oder zu regulierenden Pflanzen oder auf den Standort solcher Pflanzen aufbringt.

12. Verfahren nach Anspruch 11, wobei die effektive Menge 20 bis 500 g pro 10 a beträgt.

**Revendications**

1. Un dérivé phénoxyacétylamide ayant la formule générale suivante (I):

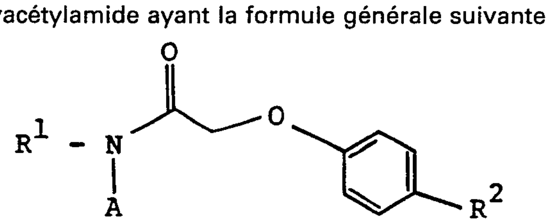

(I)

dans lequel

$R^1$ représente un atome d'hydrogène et

$R^2$ représente un atome d'halogène;

caractérisé en ce que A représente un radical 1,5-dicarboxypentyle, un radical 1,4-dicarboxybutyle, un radical 1-carboxy-1-phénylméthyle, un radical 3-carboxypropyle, un radical 1-carboxy-3-propanol, un radical 1-carboxypentyle, un radical 1-carboxybutyle, un radical 1-carboxyheptyle, ou un groupe

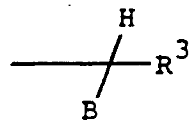

dans lequel,

$R^3$ représente un radical alkyle à chaîne linéaire ayant de 1 à 4 atomes de carbone, substitué par un radical vinyle, un radical époxy, un radical nitroguanidino, ou un radical cycloalkyle ayant de 3 à 5 atomes de carbone; et B représente un radical carboxylique ou; $R^3$ représente un radical alkyle à chaîne ramifiée ayant 3 à 4 atomes de carbone; et B représente un radical formyle, un radical hydroxyméthyle ou un radical ester d'acide alkylcarboxylique ayant de 1 à 4 atomes de carbone; ou dans lequel

$R^1$ et $R^3$ pris ensemble, représentent un radical alkylène ayant jusqu'à 4 atomes de carbone et qui forment une structure cyclique avec l'atome d'azote auquel est relié $R^1$ et l'atome de carbone auquel est relié $R^3$, et B représente un acide carboxylique.

2. Un dérivé phénoxyacétylamide selon la revendication 1, dans lequel $R^2$ représente un atome de chlore ou un atome de brome.

3. Un dérivé phénoxyacétylamide selon la revendication 1 ou 2, dans lequel le dérivé est optiquement actif.

4. L'utilisation comme herbicide d'un dérivé selon l'une quelconque des revendications 1 à 3.

5. Un procédé pour la production d'un dérivé phénoxyacétylamide de la revendication 1 comprenant l'une des réactions suivantes (i) la réaction d'un dérivé d'amino acide de formule suivante

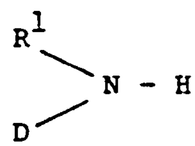

dans lequel

$R^1$ représente un atome d'hydrogène

D représente un radical 1,5-dicarboxypentyle, un radical 1,4-dicarboxybutyle, un radical 1-carboxy-1-phénylméthyle, un radical 3-carboxypropyle, un radical 1-carboxy-3-propanol, un radical 1-carboxypentyle, un radical 1-carboxybutyle, un radical 1-carboxyheptyle, ou un radical

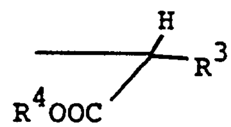

dans lequel

$R^3$ représente un radical alkyle à chaîne ramifiée ayant 3 à 4 atomes de carbone ou un radical alkyle à chaîne linéaire ayant de 1 à 4 atomes de carbone substitué par un radical vinyle, un radical époxy, un radical nitroguanidino, ou un radical cycloalkyle ayant 3 à 5 atomes de carbone; où

$R^1$ et $R^3$ pris ensemble forment une structure cyclique avec l'atome d'azote auquel $R^1$ est lié et l'atome de carbone auquel $R^3$ est lié;

$R^4$ représente un atome d'hydrogène ou un radical alkyle ayant de 1 à 4 atomes de carbone;
avec un acide carboxylique ou un dérivé d'acide carboxylique de deux formules suivantes (IIIa) ou (IIIb):

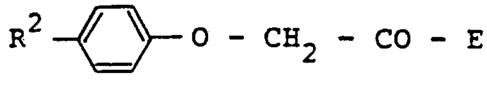

(IIIa)

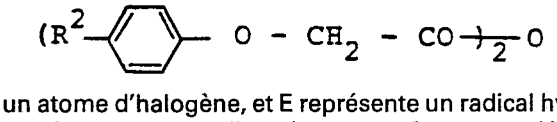

(IIIb)

dans lequel $R^2$ représente un atome d'halogène, et E représente un radical hydroxyle, un atome d'halogène ou un radical ester actif, en présence ou non d'une base pour former un dérivé phénoxyacétylamide de la présente invention ayant la formule suivante (Ia):

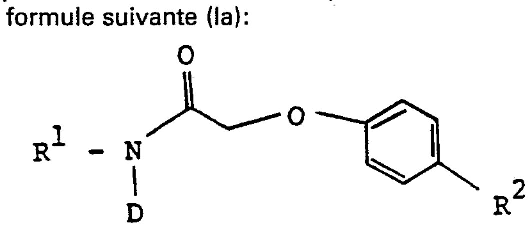

(Ia)

dans lequel $R^1$, $R^2$ et D ont les mêmes significations que celles définies ci-dessus; (ii) la réduction d'un dérivé (Ia) en présence d'un agent réducteur (iii) la réduction d'un composé (Ia) en présence d'un agent réducteur et ensuite l'oxydation du produit obtenu en présence d'un agent d'oxydation; (iv) oxydation d'un composé (Ia) dans lequel D a la formule

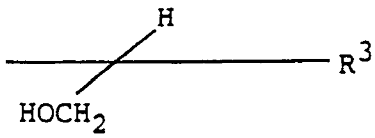

en présence d'un agent d'oxydation.

6. Un procédé selon la revendication 5, dans lequel la base est un hydroxyde de métal alcalin ou une trialkylamine.

7. Un procédé selon la revendication 5, dans lequel l'agent réducteur est le borohydrure de sodium.

8. Un procédé selon la revendication 5, dans lequel l'agent d'oxydation est en complexe de trioxyde de soufre avec la pyridine dans le diméthylsulfoxyde, l'acide chromique, le chromate de sodium avec de l'acide sulfurique, le dioxyde de manganèse, ou l'oxyde d'argent.

9. Une composition herbicide comprenant un dérivé phénoxyacéthylamide selon l'une quelconque des revendications 1 à 3 mélangé avec un support.

10. Une composition herbicide selon la revendication 9, dans laquelle ledit dérivé phénoxyacétylamide est présent dans une proportion allant de 0,5 à 90% en poids de la composition.

11. Une méthode pour tuer les plantes ou contrôler leur croissance comprenant le traitement avec une quantité efficace d'un dérivé phénoxyacéthylamide selon l'une quelconque des revendications 1 à 3, ou de l'une des compositions herbicides des revendications 9 et 10, appliqué à un milieu sur lequel les plantes à tuer ou à contrôler peuvent se développer, ou appliqué aux plantes à tuer ou à contrôler, ou au site de telles plantes.

12. Un procédé selon la revendication 11, dans lequel la quantité efficace est comprise entre 20 et 500 g pour 10 ares.